# EUROPEAN PATENT SPECIFICATION

(11) **EP 2 702 016 B1**
(45) Date of publication and mention of the grant of the patent: **13.02.2019**
(21) Application number: 11802148.4
(22) Date of filing: 09.11.2011
(51) Int. Cl.: C04B 26/14

(54) **HIGH WORKABILITY EPOXY GROUT**
EPOXIDMÖRTEL MIT SEHR GUTER BEARBEITBARKEIT
MORTIER ÉPOXYDE-CIMENT TRÈS FACILE À TRAVAILLER

(30) Priority: 27.04.2011 IT MI20110700
(43) Date of publication of application: 05.03.2014
(73) Proprietor: Kerakoll S.p.A., 41049 Sassuolo (MO) (IT)
(72) Inventor: SGHEDONI, Gianluca, I-41049 Sassuolo (Modena) (IT)
(74) Representative: Biggi, Cristina
(86) International application number: PCT/IB2011/054995
(87) International publication number: WO 2012/146958

(56) References cited:
- EP-A2- 0 176 192
- EP-B1- 1 771 397
- DE-A1- 3 726 293
- US-A- 5 317 046
- US-A1- 2004 134 163

## Description

The present invention relates to a high workability epoxy grout and the use thereof as a filler material for the installation of tiles.

As is well known, ceramic, natural stone and vitreous mosaic claddings are generally made by gluing tiles of various sizes to a substrate; the tiles are normally laid side by side, leaving spaces (tile joints) of variable size. Said joints perform the technical function of joining the tiles and compensating for imperfections in the materials and any imprecision of installation, thus assuring the best functional continuity of the cladding. The joints also fulfil an equally important aesthetic function, which is decisive for achieving the desired final appearance of the cladding.

Once the adhesive that fixes the tiles has set, the joints are filled with a hardening filler material called grout. The grout is applied with a suitable rubber spatula, normally over the entire tiled surface. Subsequently, the applier removes the excess grout from the tiles and finishes the surface of the joint through the action of a sponge usually moistened with water (so-called "sponging off").

The grouts used as joint fillers in ceramic tiling can be formulated with binders of a cementitious or organic type. Organic grouts are normally subdivided into bicomponent (of an epoxidic/amino nature) or monocomponent (acrylic, polyurethanic, etc.).

The patent application EP0176192 discloses a two-component composition comprising an epoxy grout resin binder, a polyamine hardener, a filler and an hydroxyester, namely Texanol.

Irrespective of their nature, grouts must be endowed with good workability in order to facilitate the application thereof in joints, both on horizontal surfaces and walls, and of a consistency such as to enable total filling of the gap under any conditions of application. A good workability of the grout enables a rapid, defect-free application. At the present state of the art, cement-based grouts exhibit an overall workability which is decidedly preferable to that of organic-based bicomponent and monocomponent grouts.

Another fundamental characteristic for a grout is the ease of removing the excess from the tiled surface by sponging it off. This operation must be as effortless as possible and such as to maintain the joint filled, with a continuous, defect-free finish.

As mentioned above, grout performs an extremely important decorative role. From this point of view, the aesthetics of the finish, homogeneity and durability of the colour and possibility of maintenance over time are also decisive.

Cement-based grouts do not offer ample guarantees in this respect. A well-known phenomenon related to this type of material is saline efflorescence, due to the formation of CaCO₃ by reaction of the CaO present in the initial matrix with water and CO₂. Different processes of hydration of such systems, due to the complexity of the cement, and a particular sensitivity to the installation conditions, may give rise to the formation of variegations in the grout's colour. Such phenomena are at the basis of aesthetic problems due to the inhomogeneity of the grout's appearance and consequently of the finished claddings. Cement-based grouts are moreover more subject to chemical attacks of various kinds and stain easily as a result of a higher or lower degree of absorption of the fluids the joint may come into contact with.

From the standpoint of dimensional stability and/or behaviour under tensional stresses as well, because of their high rigidity, grouts based on cementitious binders can pose significant problems. Phenomena of cracking due to hygrometric shrinkage during the hardening phase or movements of linear contraction and expansion of the materials making up the cladding are in fact common.

By their very nature, organic grouts, in contrast, assure superior performance in terms of dimensional deformability, impermeability to fluids, which is practically total, and resistance to chemical aggressions and stains.

Although cement-based grouts are the most widely used because of their easy applicability, there remains the fact that epoxy grouts guarantee a considerably superior aesthetic result, more complete functionality and higher mechanical durability.

Typically, a bicomponent epoxy grout consists of a first component including a liquid epoxy resin, possibly diluted with a reactive diluent, in which inorganic fillers and pigments are dispersed along with various additives, such as plasticizers and rheological additives, and a second component including at least one polyamine or polyamide or a derivative thereof, which performs the function of crosslinking the resin by reaction between the amine groups and the epoxy groups.

Patent EP 1 771 397 B1 relates to a mixture for applying a tiled cladding which includes an epoxy binder, a hardener, mineral fillers, a rheological additive for facilitating the application of the mixture and a plasticizer/wetting agent comprising isomers of the diisopropyl-naphthalene (C₁₆H₂₀), which imparts hydrophobic properties to the material.

The Applicant has now posed itself the problem of producing a non-water-based epoxy grout that has the following characteristics:
- high workability during application in the joints;
- ease of removal and cleaning away of the excess grout (spongeability), using the same methods as for cement grout;
- low emission of volatile organic substances (VOCs);
- high aesthetic and functional quality in the long term, in particular a substantial absence of opalescence or haze in the hardened product, such as to guarantee a bright, vivid colouring of the joint;
- impermeability and stain resistance;
- resistance to fungi and bacteria;
- good chemical and mechanical resistance.

The Applicant has now found that adding at least one hydroxyester as hereinafter defined to a non-water-based epoxy grout allows the aforesaid technical problem to be solved, since, in particular, it considerably reduces the viscosity of the mixture, thus improving the workability of the product during its application; at the same time, thanks to its polarity, it gives rise to a correct level of emulsifiability of the product, such as to facilitate in an evident manner the removal of excess grout, cleaning of the surfaces and shaping of the joint by sponging off with water. In addition, the high compatibility of the hydroxyester with the crosslinked epoxy system imparts lustre and an appearance of continuity to the hardened product.

In addition, the hydroxyester as hereinafter defined, despite being perfectly miscible with the other components of the grout, is not classifiable as a solvent, according to the definition by now widely adopted at a European level (Directive 2004-42-EC - Decopaint), so that it allows VOC emissions to be significantly reduced.

In a first aspect, the present invention thus relates to an epoxy grout comprising:
at least one epoxy resin;
a mixture of a cycloaliphatic polyamine and polyamidoamine;
at least one mineral filler;
at least one hydroxyester having a boiling point higher than or equal to 250°C.

In a second aspect, the present invention relates to the use of an epoxy grout as defined above as a filler of spaces present between side-by-side tiles (joints).

In another aspect, the present invention relates to a kit for filling spaces present between side-by-side tiles (joints), comprising:
(A) a first component which comprises:
   at least one epoxy resin;
   at least one mineral filler;
(B) a second component which comprises:
   a mixture of a cycloaliphatic polyamine and polyamidoamine;
   wherein at least one of the first and second components comprises at least one hydroxyester as defined above. Preferably, said at least one hydroxyester is selected from among products of formula (I):

      R1-(CO)-O-R2-(O-(CO)-R3)ₓ (I)

      wherein:
   x = 0, 1;
   R1 and R3, equal to or different from each other, are alkyl groups C₁-C₁₄, preferably C₂-C₈, linear, cyclic and/or branched, optionally substituted by from 1 to 3 - OH groups;
   R2 is either an alkylene (when x=1) or an alkyl group (when x=0) C₁-C₁₀, preferably C₂-C₈, linear, cyclic and/or branched, optionally substituted by from 1 to 3 -OH groups;
   with the proviso that the total number of carbon atoms in formula (I) is from 7 to 18, preferably from 9 to 16, and that the total number of -OH groups is from 1 to 3.

Preferably, R1 and R3, equal to or different from each other, are selected from among: ethyl, n-propyl, iso-propyl, n-butyl, iso-butyl, tert-butyl, n-pentyl, 2-methyl-n-butyl, 3-methyl-n-butyl, n-hexyl, 2-methyl-n-pentyl, 3-methyl-n-pentyl, 4-methyl-n-pentyl, optionally substituted by from 1 to 3 -OH groups, preferably by one -OH group.

Preferably, when x=1, R2 is chosen from among the following linear or branched groups: propylene, butylene, pentylene, hexylene, heptylene and octylene, optionally substituted by from 1 to 3 -OH groups, preferably by one -OH group.

Preferably, when x=0, R2 is selected from among the following linear or branched groups: propyl, butyl, pentyl, hexyl, heptyl and octyl, optionally substituted by from 1 to 3 -OH groups, preferably by one -OH group.

Hydroxyesters according to formula (I) are in many cases commercial products, and can in any case be prepared according to processes known in the art, in particular by an esterification reaction between a corresponding polyol and a corresponding carboxylic acid. In the case in which x = 0, it is necessary to esterify only one of the -OH groups of the polyol, so that the other -OH groups must be duly protected by inserting a protecting group. After the esterification has taken place, the protecting group can be removed according to known techniques. Particularly preferred are the products of esterification between a carboxylic acid C₂-C₁₅ and a polyol selected from among: ethylene glycol, glycerol, 2,2-dimethyl-1,3-propanediol, 2,2,4-trimethyl-1,3-pentanediol, 2-ethylhexane-1,3-diol, and 2-butyl-2-ethyl-1,3-propanediol.

Particularly preferred is 2,2,4-trimethyl-1,3-pentanediol monoisobutyrate (CAS: 25265-77-4), a commercial product produced by the Eastman Chemical Co. under the Texanol™ trademark.

As regards the epoxy resin, this is generally a resin crosslinkable at room temperature so as to form, upon being mixed with the polyamine compound, a stable crosslink through a reaction between the epoxy groups and amine groups. The epoxy resin contains at least one, preferably at least due, 1,2-epoxide groups, and is preferably liquid at room temperature. The epoxy resin preferably has an epoxide equivalent weight (EEW) ranging between 150 and 1200, most preferably between 156 and 700.

The epoxy resin can be of an aliphatic, aromatic and/or heterocyclic type and can be replaced by various substituents, e.g. halogens, hydroxyls, ether groups and the like. The epoxy resin can be used as such or in the form of a solution in a suitable solvent. The solvent can be of the reactive or non-reactive type, in particular an ether, such as, for example, C₁₂-C₁₄ alkyl glycidyl ether (CAS No. 68609-97-2).

Epoxy resins that are particularly preferred are those obtained from: bisphenol-A/epichlorohydrin (CAS No. 25068-38-6), bisphenol-F/diglycidyl ether (CAS No. 028064-14-4).

Cycloaliphatic polyamines, in which the amine group is directly bound to a saturated hydrocarbon ring, impart excellent performance characteristics to the hardened grout in terms of chemical and mechanical resistance, and moreover they have a light colour and high resistance to yellowing. Typical examples of cycloaliphatic amines from which the aforesaid polyamines can be obtained are: isophorone diamine (IPDA), 4,4'-diamine-dicyclohexylmethane, 3,3'-dimethyl-4,4'-diamine-dicyclohexylmethane, cyclohexylamine-propylamine and N-aminoethylpiperazine, or mixtures thereof.

As regards the polyamidoamines, these are generally products of a reaction between a polyamine (in general diethylenetriamine, triethylenetetramine, tetraethylenepentamine or piperazine) with a mono- or dicarboxylic acid (usually C₁₆, C₁₈ or C₁₉, derived from tall oil, soybean oil or ricinoleic acid). A particular subclass is the imidazoline polyamidoamines, which differ for the presence of imidazole rings, obtainable by heat treatment during synthesis. Thanks to their high emulsifiability with water, polyamidoamines facilitate the steps of cleaning and finishing by sponging off the grout during installation.

The ratio between epoxy groups in the epoxy resin and amine groups in the mixture of the cycloaliphatic polyamine and the polyamidoamine can vary depending on the type of products used and the properties one intends to obtain for the final grout.

Preferably, the molar ratio between epoxy groups and amine groups ranges from 0.8 to 1.2, more preferably from 0.9 to 1.1.

As regards the mineral filler, this can be selected from among the ones commonly used in the epoxy resin sector, such as, for example: silica, alumina, quartz, calcite, bentonite, limestone, magnesite, chalk, mica, talc, clays, coloured inerts, glasses, and mixtures thereof. The mineral filler generally has a predetermined particle size distribution aimed at obtaining a homogeneous, easily workable product. Normally, the mineral filler has an average particle size of between 1 and 800 microns, preferably between 10 and 500 microns.

In addition to the mineral filler, colouring agents and/or pigments can be added in order to impart the desired colour. These may be inorganic in nature (e.g.: titanium dioxide, iron oxides, carbon black, chromium oxides, bismuth salts, vanadium, cobalt, molybdenum, aluminium) or organic (e.g.: azo pigments, phthalocyanine, chinonic compounds). The pigments and/or colouring agents can be added as such, or associated beforehand with the mineral filler, for example by coating the latter with a paint that contains said pigments and/or colouring agents.

The epoxy grout according to the present invention can also contain other components including: UV stabilizers, dispersing, anti-foaming, deaerating and wetting agents, plasticizers, fungicides, adhesion promoters, etc.

Preferably, the epoxy grout according to the present invention further comprises at least one rheological additive, which has the purpose of improving the applicability of the final product. Said rheological additive can preferably be selected from among: hydrogenated castor oil, pyrogenic silicas, bentonites, polyurethane or acrylic thickeners, and mixtures thereof.

The epoxy grout according to the present invention can be produced by mixing the various components according to conventional techniques. Preferably, the grout is produced in the form of a bicomponent grout, whose component A comprises the epoxy resin, while component B comprises the mixture of a cycloaliphatic polyamine and polyamidoamine. The two components A and B are produced and packaged separately, and mixed only at the time of application, which must take place within a short time after mixing so as to avoid premature crosslinking of the product.

Preferably, in its final form ready for application, the epoxy grout according to the present invention comprises:
from 3 to 20% by weight, more preferably from 5 to 15% by weight, of at least one epoxy resin;
from 2 to 15% by weight, more preferably from 4 to 10% by weight, of the mixture of a cycloaliphatic polyamine and polyamidoamine;
from 50 to 90% by weight, more preferably from 60 to 80% by weight, of at least one mineral filler;
from 0.2 to 10% by weight, more preferably from 0.5 to 7% by weight, of at least one hydroxyester having a boiling point higher than or equal to 250°C;
from 0 to 3% by weight, more preferably from 0.1 to 1.5% by weight, of at least one rheological additive.

The present invention will now be further illustrated by means of some examples of embodiments, which are provided solely by way of example and do not limit the scope of the invention itself.

### EXAMPLE 1.

The following bicomponent epoxy grout was prepared with components A and B (used in a 94:6 ratio) having the composition specified below:

### Component A:

| | |
|---|---|
| Diluted epoxy resin | 13.80% by weight |
| Hydrogenated castor oil | 1.20% by weight |
| Quartz coated with a colouring layer | 79.80% by weight |
| Hydroxyester | 5.20% by weight |

### Component B:

| | |
|---|---|
| Modified cycloaliphatic polyamine | 66.00% by weight |
| Imidazolic polyamidoamine | 34.00% by weight |

- Diluted epoxy resin: epoxy resin with an average molecular weight < 700 (product of reaction between Bisphenol A and Epichlorohydrin; CAS No. 25068-38-6) diluted with alkyl glycidyl ether C₁₂-C₁₄ (CAS No. 68609-97-2);
- Hydroxyester: 2,2,4-trimethyl-1,3-pentanediol monoisobutyrate (Texanol™, commercial product of the Eastman Chemical Co.);
- Modified cycloaliphatic polyamine: Aradur™ 46 S, product of the Huntsman LLC);
- Imidazolic polyamidoamine: Itamid™ FL41/S, commercial product (DD-CHEM Srl).

This formulation, once parts A and B had been suitably mixed, was tested as a tile joint filler in ceramic flooring. The workability of the mixture demonstrated to be optimal, also when applied on a vertical wall. The tiling was very easily cleaned using a normal sponge and water. The final aesthetic result was excellent, with homogeneous, filled joints.

The same formulation was also submitted to various laboratory tests on the hardened product, which showed excellent chemical and mechanical resistance, impermeability, colour stability after aging with UV laps, and resistance to bacterial and fungal attacks. These tests demonstrate overall the high quality of the product as a grout for ceramic flooring.

## Claims

1. Epoxy grout comprising:
at least one epoxy resin;
a mixture of a cycloaliphatic polyamine and a polyamidoamine;
at least one mineral filler;
at least one hydroxyester having a boiling point higher than or equal to 250°C.

2. Epoxy grout according to claims 1, wherein the polyamidoamine is a imidazoline polyamidoamine

3. Epoxy grout according to claim 1 or 2, wherein said at least one hydroxyester is selected from products of formula (I):
R1-(CO)-O-R2-(O-(CO)-R3)ₓ (I)
wherein:
x = 0, 1;
R1 and R3, equal or different from each other, are alkyl groups C₁-C₁₄, preferably C₂-C₈, linear, cyclic and/or branched, optionally substituted by from 1 to 3 -OH groups;
R2 is either an alkylene (when x=1) or an alkyl group (when x=0) C₁-C₁₀, preferably C₂-C₈, linear, cyclic and/or branched, optionally substituted by from 1 to 3 -OH groups;
with the proviso that the total number of carbon atoms in formula (I) is from 7 to 18, preferably from 9 to 16, and that the total number of -OH groups is from 1 to 3.

4. Epoxy group according to claim 3, wherein, in formula (I), R1 and R3, equal or different from each other, are selected from: ethyl, n-propyl, iso-propyl, n-butyl, iso-butyl, tert-butyl, n-pentyl, 2-methyl-n-butyl, 3-methyl-n-butyl, n-hexyl, 2-methyl-n-pentyl, 3-methyl-n-pentyl, 4-methyl-n-pentyl, optionally substituted by from 1 to 3 -OH groups, preferably by one -OH group.

5. Epoxy grout according to claim 3, wherein, in formula (I):
when x=1, R2 is selected from the following linear or branched groups: propylene, butylene, pentylene, hexylene, heptylene, octylene, optionally substituted by from 1 to 3 -OH groups, preferably by one -OH group;
or
when x=0, R2 is selected from the following linear or branched groups: propyl, butyl, pentyl, hexyl, heptyl, octyl, optionally substituted by from 1 to 3 -OH groups, preferably by one -OH group;

6. Epoxy grout according to claim 3, wherein said at least one hydroxyester is 2,2,4-trimethyl-1,3-pentanediol monoisobutyrate (CAS: 25265-77-4).

7. Epoxy grout according to anyone of the preceding claims, wherein said at least one epoxy resin is a resin obtained from: bisphenol-A/ epichlorohydrin (CAS No. 25068-38-6), bisphenol-F/diglycidyl ether (CAS No. 028064-14-4).

8. Epoxy grout according to anyone of the preceding claims, wherein the molar ratio between epoxy groups and amine groups ranges from 0.8 to 1.2, preferably from 0.9 to 1.1.

9. Epoxy grout according to anyone of the preceding claims, wherein said at least one mineral filler is selected from: silica, alumina, quartz, calcite, bentonite, limestone, magnesite, chalk, mica, talc, clays, coloured inerts, glasses, and mixtures thereof.

10. Epoxy grout according to anyone of the preceding claims, further comprising at least one rheological additive.

11. Epoxy grout according to claim 10, wherein said at least one rheological additive is selected from:
hydrogenated castor oil, pyrogenic silicas, bentonites, polyurethane or acrylic thickeners, and mixtures thereof.

12. Epoxy grout according to anyone of the preceding claims, comprising:
from 3 to 20% by weight, preferably from 5 to 15% by weight, of at least one epoxy resin;
from 2 to 15% by weight, preferably from 4 to 10% by weight, of a mixture of a cycloaliphatic polyamine and a polyamidoamine;
from 50 to 90% by weight, preferably from 60 to 80% by weight, of at least one mineral filler;
from 0.2 to 10% by weight, preferably from 0.5 to 7% by weight, of at least one hydroxyester having a boiling point higher than or equal to 250°C;
from 0 to 3% by weight, preferably from 0.1 to 1.5% by weight, of at least one rheological additive.

13. Use of an epoxy grout according to anyone of claims from 1 to 12 as a filler of spaces present between side-by-side tiles.

14. Kit for filling spaces present between side-by-side tiles, comprising:
(A) a first component which comprises:
at least one epoxy resin;
at least one mineral filler;
(B) a second component which comprises:
a mixture of a cycloaliphatic polyamine and a polyamidoamine;
wherein at least one of the first and second components comprises at least one hydroxyester having a boiling point higher than or equal to 250°C.

## Patentansprüche

1. Epoxidmörtel, umfassend:
mindestens ein Epoxidharz;
eine Mischung aus einem cycloaliphatischen Polyamin und einem Polyamidoamin;
mindestens einen Mineralfüllstoff;
mindestens einen Hydroxyester mit einem Siedepunkt höher als oder gleich wie 250°C.

2. Epoxidmörtel nach Anspruch 1, wobei das Polyamidoamin ein Imidazolin-Polyamidoamin ist.

3. Epoxidmörtel nach Anspruch 1 oder 2, wobei der mindestens eine Hydroxyester aus Produkten der Formel (I)
R1-(CO)-O-R2-(O-(CO)-R3)ₓ (I)
ausgewählt ist, wobei:
x = 0, 1;
R1 und R3, gleich oder verschieden voneinander, sind Alkylgruppen C₁-C₁₄, vorzugsweise C₂-C₈, linear, cyclisch und/oder verzweigt, gegebenenfalls substituiert durch 1 bis 3 -OH-Gruppen;
R2 ist entweder ein Alkylen (wenn x=1) oder eine Alkylgruppe (wenn x=0) C₁-C₁₀, vorzugsweise C₂-C₈, linear, cyclisch und/oder verzweigt, gegebenenfalls substituiert durch 1 bis 3 -OH-Gruppen;
mit der Maßgabe, dass die Gesamtzahl der Kohlenstoffatome in Formel (I) von 7 bis 18, vorzugsweise von 9 bis 16, beträgt und dass die Gesamtzahl der -OH-Gruppen von 1 bis 3 beträgt.

4. Epoxidgruppe nach Anspruch 3, wobei in Formel (I) R1 und R3, gleich oder verschieden voneinander, ausgewählt sind aus: Ethyl, n-Propyl, Iso-Propyl, n-Butyl, Iso-Butyl, tert-Butyl, n-Pentyl, 2-Methyl-n-Butyl, 3-Methyl-n-Butyl, n-Hexyl, 2-Methyl-n-Pentyl, 3- Methyl-n-Pentyl, 4-Methyl-n-Pentyl, gegebenenfalls substituiert durch 1 bis 3 -OH-Gruppen, vorzugsweise durch eine -OH-Gruppe.

5. Epoxidmörtel nach Anspruch 3, wobei in Formel (I):
wenn x=1 ist, R2 aus den folgenden linearen oder verzweigten Gruppen ausgewählt ist: Propylen, Butylen, Pentylen, Hexylen, Heptylen, Octylen, gegebenenfalls substituiert durch 1 bis 3 -OH-Gruppen, vorzugsweise durch eine -OH-Gruppe;
oder
wenn x=0 ist, R2 aus den folgenden linearen oder verzweigten Gruppen ausgewählt ist: Propyl, Butyl, Pentyl, Hexyl, Heptyl, Octyl, gegebenenfalls substituiert durch 1 bis 3 -OH-Gruppen, vorzugsweise durch eine -OH-Gruppe.

6. Epoxidmörtel nach Anspruch 3, wobei der mindestens eine Hydroxyester 2,2,4-Trimethyl-1,3-Pentandiolmonoisobutyrat ist (CAS: 25265-77-4).

7. Epoxidmörtel nach einem der vorhergehenden Ansprüche, wobei das mindestens eine Epoxidharz ein Harz ist, das erhalten wird aus: Bisphenol-A/ Epichlorhydrin (CAS-Nr. 25068-38-6), Bisphenol-F/Diglycidylether (CAS-Nr. 028064-14-4)

8. Epoxidmörtel nach einem der vorhergehenden Ansprüche, wobei das Molverhältnis zwischen Epoxidgruppen und Amingruppen im Bereich von 0.8 bis 1.2, vorzugsweise von 0.9 bis 1.1 liegt.

9. Epoxidmörtel nach einem der vorhergehenden Ansprüche, wobei der mindestens eine Mineralfüllstoff ausgewählt ist aus: Kieselsäure, Aluminiumoxid, Quarz, Kalzit, Bentonit, Kalkstein, Magnesit, Kreide, Glimmer, Talkum, Tone, farbige Inerten, Gläsern und Mischungen davon.

10. Epoxidmörtel nach einem der vorhergehenden Ansprüche, ferner umfassend mindestens ein rheologisches Additiv.

11. Epoxidmörtel nach Anspruch 10, wobei das mindestens eine rheologische Additiv ausgewählt ist aus:
hydriertem Rizinusöl, pyrogenen Kieselsäuren, Bentoniten, Polyurethan- oder Acrylverdickern und Mischungen davon.

12. Epoxidmörtel nach einem der vorhergehenden Ansprüche, umfassend:
3 bis 20 Gew.-%, vorzugsweise 5 bis 15 Gew.-%, mindestens eines Epoxidharzes;
2 bis 15 Gew.-%, vorzugsweise 4 bis 10 Gew.-%, einer Mischung aus einem cycloaliphatischen Polyamin und einem Polyamidoamin;
50 bis 90 Gew.-%, vorzugsweise 60 bis 80 Gew.-%, mindestens eines Mineralfüllstoffes;
0,2 bis 10 Gew.-%, vorzugsweise 0.5 bis 7 Gew.-%, mindestens eines Hydroxyesters mit einem Siedepunkt größer als oder gleich wie 250°C;
0 bis 3 Gew.-%, vorzugsweise von 0.1 bis 1.5 Gew.-%, mindestens eines rheologischen Additivs.

13. Verwendung eines Epoxidmörtels nach einem der Ansprüche 1 bis 12 als Füllstoff von Zwischenräumen zwischen nebeneinanderliegenden Fliesen.

14. Bausatz zum Füllen von Zwischenräumen zwischen nebeneinanderliegenden Fliesen, umfassend:
(A) eine erste Komponente, die umfasst:
mindestens ein Epoxidharz;
mindestens einen Mineralfüllstoff;
(B) eine zweite Komponente, die umfasst:
eine Mischung aus einem cycloaliphatischen Polyamin und einem Polyamidoamin;
wobei mindestens eine der ersten und zweiten Komponenten mindestens einen Hydroxyester mit einem Siedepunkt höher als oder gleich wie 250°C umfasst.

## Revendications

1. Mortier époxyde-ciment comprenant:
au moins une résine époxy;
un mélange d'une polyamine cycloaliphatique et d'une polyamidoamine;
au moins une charge minérale;
au moins un hydroxyester ayant un point d'ébullition supérieur ou égal à 250°C.

2. Mortier époxyde-ciment selon la revendication 1, dans lequel la polyamidoamine est une polyamidoamine imidazoline.

3. Mortier époxyde-ciment selon la revendication 1 ou 2, dans lequel ledit au moins un hydroxyester est choisi à partir de produits de formule (I) :
R1-(CO)-O-R2-(O-(CO)-R3)ₓ (I)
où:
x = 0, 1;
R1 et R3, égaux ou différents l'un de l'autre, sont des groupes alkyles en C₁-C₁₄, de préférence en C₂-C₈, linéaires, cycliques et/ou ramifiés, facultativement substitués à partir d'1 à 3 groupes -OH;
R2 est soit un groupe alkylène (lorsque x = 1) ou un groupe alkyle (lorsque x = 0) en C₁-C₁₀, de préférence en C₂-C₈, linéaire, cyclique et/ou ramifié, facultativement substitué à partir d'1 à 3 groupes -OH;
à condition que le nombre total d'atomes de carbone dans la formule (I) est compris entre 7 et 18, de préférence entre 9 et 16, et que le nombre total de groupes -OH est compris entre 1 et 3.

4. Groupe époxyde selon la revendication 3, dans lequel, dans la formule (I), R1 et R3, égaux ou différents l'un de l'autre, sont choisis parmi les éléments suivants: éthyle, n-propyle, iso-propyle, n-butylate, iso-butylate, tert-butylate, n-pentyle, 2-méthyle-n-butylate, 3-méthyle-n-butylate, n-hexyl, 2-méthyle-n-pentyle, 3- méthyle-n-pentyle, 4-méthyle-n-pentyle, facultativement substitué à partir d'1 à 3 groupes -OH, de préférence par un groupe -OH.

5. Mortier époxyde-ciment selon la revendication 3, dans lequel, dans la formule (I):
lorsque x = 1, R2 est choisi à partir des groupes linéaires ou ramifiés suivants: propylène, butylène, pentylène, hexylène, heptylène, octylène, facultativement substitué par 1 à 3 groupes -OH, de préférence par un groupe -OH;
ou
lorsque x = 0, R2 est choisi à partir des groupes linéaires ou ramifiés suivants: propyle, butyle, pentyle, hexyle, heptyle, octyle, facultativement substitué par 1 à 3 groupes -OH, de préférence par un groupe -OH.

6. Mortier époxyde-ciment selon la revendication 3, dans lequel ledit au moins un hydroxyester est du 2,2,4-triméthyle-1,3- pentanediol monoisobutyrate (CAS: 25265-77-4).

7. Mortier époxyde-ciment selon l'une quelconque des revendications précédentes, dans lequel ladite au moins une résine époxy est une résine obtenue à partir de:
bisphénol-A/ épichlorhydrine (CAS N° 25068-38-6), bisphénol-F/diglycidyl ether (CAS N° 028064-14-4)

8. Mortier époxyde-ciment selon l'une quelconque des revendications précédentes, dans lequel le rapport molaire entre les groupes époxydiques et les groupes d'amine est compris entre 0.8 et 1.2, de préférence de 0.9 à 1.1.

9. Mortier époxyde-ciment selon l'une quelconque des revendications précédentes, dans lequel ladite au moins une charge minérale est choisie à partir de: silice, alumine, quartz, calcite, bentonite, pierre calcaire, magnésite, chaux, mica, talc, argiles, matières inertes colorées, verres et leurs mélanges.

10. Mortier époxyde-ciment selon l'une quelconque des revendications précédentes, comprenant de plus au moins un additif rhéologique.

11. Mortier époxyde-ciment selon la revendication 10, dans lequel ledit au moins un additif rhéologique est choisi à partir de: d'huile de ricin hydrogénée, de silices pyrogénées, de bentonites, d'épaississants à base de polyuréthane ou d'acrylique et leurs mélanges.

12. Mortier époxyde-ciment selon l'une quelconque des revendications précédentes, comprenant:
de 3 à 20% en poids, de préférence entre 5 et 15% en poids d'au moins une résine époxy;
de 2 à 15% en poids, de préférence entre 4 et 10% en poids d'un mélange d'une polyamine cycloaliphatique et d'une polyamidoamine;
de 50 à 90% en poids, de préférence entre 60 et 80% en poids d'au moins une charge minérale;
de 0.2 à 10% en poids, de préférence entre 0.5 et 7% en poids d'au moins un hydroxyester ayant un point d'ébullition supérieur ou égal à 250°C;
de 0 à 3% en poids, de préférence entre 0.1 et 1.5% en poids d'au moins un additif rhéologique.

13. Utilisation d'un mortier époxyde-ciment selon l'une quelconque des revendications de 1 à 12 comme matière de remplissage d'espaces présents entre des tuiles placées côte à côte.

14. Kit de remplissage d'espaces présents entre des tuiles placées côte à côte, comprenant:
(A) un premier composant comprenant:
au moins une résine époxy;
au moins une charge minérale;
(B) un second composant comprenant:
un mélange d'une polyamine cycloaliphatique et d'une polyamidoamine;
dans lequel au moins l'un des premier et second composants comprend au moins un hydroxyester ayant un point d'ébullition supérieur ou égal à 250°C.
